(19) Europäisches Patentamt
European Patent Office
Office européen des brevets

(11) **EP 0 857 119 B1**

(12) **EUROPÄISCHE PATENTSCHRIFT**

(45) Veröffentlichungstag und Bekanntmachung des Hinweises auf die Patenterteilung:
**11.07.2001 Patentblatt 2001/28**

(21) Anmeldenummer: **97940083.5**

(22) Anmeldetag: **14.08.1997**

(51) Int Cl.$^7$: **B60L 15/00**

(86) Internationale Anmeldenummer:
**PCT/EP97/04451**

(87) Internationale Veröffentlichungsnummer:
**WO 98/08702 (05.03.1998 Gazette 1998/09)**

(54) **STEUERUNGSVORRICHTUNG FÜR LINEARMOTOR-GETRIEBENE EINRICHTUNGEN**

CONTROLLER FOR DEVICES DRIVEN BY LINEAR MOTORS

SYSTEME DE COMMANDE POUR DISPOSITIFS ENTRAINES PAR MOTEUR LINEAIRE

(84) Benannte Vertragsstaaten:
**BE CH DE FR GB IT LI**

(30) Priorität: **26.08.1996 DE 19634449**

(43) Veröffentlichungstag der Anmeldung:
**12.08.1998 Patentblatt 1998/33**

(73) Patentinhaber: **Brückner Maschinenbau GmbH**
**83313 Siegsdorf (DE)**

(72) Erfinder:
• **OEDL, Günter**
**A-5020 Salzburg (AT)**
• **KREINER, Rudolph**
**D-83334 Inzell (DE)**
• **ZINTZ, Wolfgang**
**D-83377 Vachendorf (DE)**

(74) Vertreter: **Flach, Dieter Dipl.-Phys. et al**
**Andrae Flach Haug**
**Adlzreiterstrasse 11**
**83022 Rosenheim (DE)**

(56) Entgegenhaltungen:
WO-A-88/10188         DE-A- 4 106 850
US-A- 4 853 602       US-A- 5 274 317
US-A- 5 530 323

**Beschreibung**

Die Erfindung betrifft eine Steuerungsvorrichtung für linearmotor-getriebene Einrichtungen, insbesondere zum Antrieb von Kluppen einer Folienreckanlage, nach dem Oberbegriff des Anspruches 1.

Linearmotorantriebe sind beispielsweise aus den US-Patentschriften US 5,036,262, US 4,853,602, US 4,825,111 oder US 4,675,582 bekannt. Derartige Antriebssysteme gestützt auf einen Linearmotorantrieb sind grundsätzlich nicht nur bei der Kunststoffolienherstellung im Rahmen einer Reckanlage, sondern auch in anderen Bereichen einsetzbar, wie dies beispielsweise in der US 4,853,602 beschrieben ist.

Verkettete Linearsynchronmotor-Systeme umfassen als sogenannte Primärteile eine Vielzahl hintereinander geschalteter Zonen mit Statorwicklungen, die in unterschiedlichen Phasenwinkeln mit vorwählbaren Stromamplituden ansteuerbar sind. Die Ansteuerung erfolgt dabei über Umrichter oder Frequenzumformer, die eine entsprechende Ausgangs-, Leistungs- oder Treiberstufe umfassen oder denen eine derartige Stufe nachgeschaltet ist.

Längs dieser Primärteile, d.h. längs der die Statorwicklungen umfassenden und in mehrere hintereinander geschaltete Zonen gegliederten Linearmotor-Strecke, sind dann sogenannte Sekundärteile über das erzeugte Magnetfeld verfahrbar. Im Falle von Folienreckanlagen handelt es sich dabei um sogenannte Kluppen.

Die aus der US 48 53 602 bekannten Umrichter haben dabei jeweils einen eigenen Steuerteil., bestehend aus einer Recheneinheit mit Adreßzählern, Speichern, Auswahllogik usw., die über einen Bus mit einer zentralen Steuereinheit verbunden sind. In den Speichern sind Profile abgespeichert, die Drei-Bit-Pulsmuster in Abhängigkeit von der Zeit darstellen. Sie werden von Adreßzählern adressiert, die ihrerseits von Zeittaktsignalen aus der Zeitbasis der Zentralsteuereinheit angesteuert werden. Die Profile sind so gewählt, daß der Übergang von einem Sektor in den nächsten überlappend mit gleicher Frequenz und Phasenlage erfolgen kann.

Ein Linearantrieb für Haustransportsysteme ist auch aus der US 48 76 966 bekannt geworden. Hierbei ist der Stator in eine Vielzahl von Sektoren aufgeteilt, die jeweils von einem Umrichter gespeist werden. Geschwindigkeitsprofile werden durch übergebene Randbedingungen (maximale Geschwindigkeit, Beschleunigung usw.) in den Recheneinheiten erzeugt und abgearbeitet. Der abgestimmte Übergang von einem Sektor in den nächsten ist dabei funktionsnotwendig.

Aus den Vorveröffentlichungen US 52 74 317, EP 417 805 A1 und US 51 13 125 ist ferner zu entnehmen, daß die Berechnung der Wechselrichter-Schaltmuster über den zeitlichen Verlauf von Stromamplituden und Phasenwinkel üblich ist. Bei digitaler Verarbeitung ergibt der zeitliche Verlauf die Abhängigkeit dieser Größen vom Zeittakt.

Die aktive Synchronisierung der Wechselrichter-Zeitbasen ist ebenfalls grundsätzlich aus der US 55 30 323 bekannt. Die den Stator zugeordneten Umrichter weisen je eine Zeitbasis mit Zeitzähler auf. Diese Zeitbasen werden über Impulse von und zur Zentrale synchronisiert.

Soweit bei den vorstehend genannten Linearsynchronmotor-Systemen alle Umrichter in Echtzeit von einer zentralen Rechner- oder Steuerungseinheit angesteuert werden, ist zu berücksichtigen, daß beispielsweise bei einer Ausgangsfrequenz von 60 Hz (entsprechend 6,6 m/s Geschwindigkeit und einer Polteilung von 0,055 m) und bei einer Auflösung von 360° in 6 Schritten bei 150 Umrichtern alle 2 ms 3 Bit über die Kommunikationsbusstruktur übertragen werden müssen, was bei 16,6 ms/8 also zu einer Nettodatenrate von 150 $^*$ 3 $^*$ 500 = 225 kBaud führt, und dies bei einer hohen Anforderung an die Zeitgenauigkeit.

Neuere Generationen von Frequenzumformung bilden den Ausgangsstrom nicht in 6 Schritten (also nicht nach Art eines Six-Step-Drives) nach, sondern erlauben eine Sinusmodulation. Dies erfordert eine feinere Sollwertvorgabe. Die Anforderung an das Übertragungsmedium (Datenbusstruktur) erhöht sich bei Verfeinerung der Auflösung quadratisch, da einerseits die Bitbreite pro Sollwert steigt und andererseits dadurch auch öfter die Sollwerte übertragen werden müssen.

Aufgabe der vorliegenden Erfindung ist es von daher, eine gegenüber dem Stand der Technik verbesserte Steuerungsvorrichtung für linearmotor-getriebene Einrichtungen zu schaffen, bei welcher der Aufwand für die Datenübertragung und die Kommunikationsstruktur zwischen einem zentralen Leitrechner und den einzelnen Frequenzumrichtern, die die Linearmotoren, d.h. die einzelnen Zonen der Linearmotoren, ansteuern, deutlich minimiert ist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Da gemäß der vorliegenden Erfindung der Aufwand für die Datenübertragung und die Kommunikationsstruktur zwischen einem zentralen Leitrechner und den einzelnen Frequenzumrichtern deutlich minimiert wird, kann die Erfindung vor allem auch bei Anlagen eingesetzt werden, die mit einer hohen Antriebsgeschwindigkeit betrieben werden.

Erfindungsgemäß müssen nicht alle Daten für das jeweilige Phasenprofil zur Ansteuerung der Linearmotor-Zonen vom Zentralrechner aus an die Umrichter übertragen werden. Ausreichend ist, daß diese Daten zumindest lediglich einmal den einzelnen Umformern zur Verfügung gestellt werden. Für die entsprechende Ansteuerung des Linearmotorantriebs ist es dann im wesentlichen nur noch erforderlich, daß über die Datenbus-Kommunikationsstruktur die Synchronisierung der Taktgeneratoren in den einzelnen Umrichtern erfolgen muß. Dieses Synchronisieren erfolgt bevorzugt in Abhängigkeit eines Clock-Generators in der zentralen Steuerungseinheit, worüber alle Clock-Generatoren in den Umrichtern, die nachfolgend auch teilweise als Slave-Clock-Generatoren bezeichnet werden, angesteuert werden. Über die Masterclock in der zentralen Steuerungseinheit wird die Ablaufgeschwindigkeit des Gesamtsystems, d. h. die Antriebsgeschwindigkeit der Sekundärteile und damit im Falle beispielsweise einer Folienreckanlage die Antriebsgeschwindigkeit der Kluppen und damit beispielsweise die Folieneinlaufgeschwindigkeit gesteuert.

Jeder Umrichter weist oder Gruppen von mehreren Umrichtern weisen einen eigenen Rechner auf, vorzugsweise in Form eines Profilgenerators und/oder einer Einrichtung zur Erzeugung einer Koordinatentransformation für die Berechnung der Stromstärken in den Statorwicklungen des Primärteils. Da die entsprechenden Daten so lokal in den einzelnen Umrichtern aufgearbeitet und erzeugt werden, wird in diesem Umfang die Datenübertragung zwischen einer zentralen Steuerungseinheit und den einzelnen Umrichtern verringert. Dabei können auf mehrere Umrichter, also für Gruppen aus zumindest zwei Umrichtern, bei Bedarf auch jeweils eine entsprechende Rechnereinheit, vorzugsweise in Form eines Profilgenerators und/oder einer Einrichtung zur Koordinatentransformation vorgesehen sein.

Auch bei einer Änderung der Geschwindigkeit und damit des von der Masterclock vorgegebenen Taktes muß dabei die Synchronität der in den Umrichtern erzeugten Taktfrequenzen gewährleistet sein, was bevorzugt über die Datenbus-Kommunikationsstruktur zwischen zentraler Steuerungseinheit und den einzelnen nachgeschalteten Umrichtern erfolgen kann, auch wenn grundsätzliche Lösungen denkbar sind, bei denen die Synchronisation der einzelnen in den Umrichtern vorgesehenen Zeitgebern nicht von einer zentralen Steuerungseinheit, sondern beispielsweise in einer interaktiven Steuerungskette oder mittels einer Informationsflußstruktur durchführbar ist, bei welcher die Daten beispielsweise von einem Umrichter zum nächsten lediglich in einer Richtung nach Art einer Nachfolgeschaltung (Daisy-Chain-Kette) weitergegeben werden.

Den vorstehend genannten Überlegungen liegt zugrunde, daß das Geschwindigkeitsprofil für alle Sekundärteile über eine jeweilige Zone (die von einem Umrichter angesteuert wird) bei einem vorgegebenen Geschwindigkeitsprofil konstant ist, und die Sekundärteile mit einem konstanten Zeitabstand T in das System eintreten, wobei sich diese Anforderungen für jeden Umrichter mit der Taktzeit T wiederholen. Von daher ist es für jeden Umrichter - wenn ihm die entsprechenden Daten für sein spezifisches Phasenprofil (der durch den Zusammenhang zwischen dem Phasenwinkel, der Stromamplitude und des Clocktaktes gegeben ist) zur Verfügung gestellt sind - nicht mehr erforderlich, nach einer einmal erfolgten Übertragung dieses Phasenprofils die entsprechenden Daten erneut zu übertragen. Lediglich die Datenübertragung für die Synchronisierung der Zeittaktgeber in den Umrichtern ist notwendig.

In einer bevorzugten Ausführungsform der Erfindung gemäß Anspruch 2 ist vorgesehen, daß die gesamte Anlage mit dem Zeittakt der Masterclock synchronisiert wird. Dies ermöglicht den Vorteil gemäß einer bevorzugten Ausführungsform der Erfindung, wonach für eine Änderung der Anlagengeschwindigkeit, beispielsweise für eine Erhöhung der Anlagengeschwindigkeit der vom Masterclock vorgegebene Zeittakt lediglich entsprechend beschleunigt werden muß, worüber alle Umrichter ihr spezifisches Programm in kürzerer Zeit abarbeiten. Durch dieses Verfahren wird gewährleistet, daß einerseits das Geschwindigkeitsprofil (bezogen auf eine Ausgangs- oder Einlaufgeschwindigkeit $v_0$) unabhängig vom Absolutwert der Produktionsgeschwindigkeit, also der Anlagengeschwindigkeit, immer konstant bleibt. Ferner läßt sich dadurch der weitere Vorteil realisieren, daß keine ergänzende Synchronisation der einzelnen Quarzuhren oder Taktgebern in den jeweiligen Umrichtern erforderlich ist, da, wie ausgeführt, die Synchronisation in Abhängigkeit des vom Masterclock vorgegebenen Zeittaktes in Form einer entsprechenden Ansteuerung erfolgt.

In einer bevorzugten Ausführungsform der Erfindung ist es ausreichend, wenn für jede Taktzeit T zumindest einmal die Zeit als Absolutwert vorzugsweise gleichzeitig an alle Umrichter versandt wird, um dadurch alle Umrichter zu synchronisieren.

Auch beim Ausfall eines übertragenen Zeit-Telegramms von der zentralen Steuerungseinheit an die Umrichter führt dies grundsätzlich nicht zu einer Beeinträchtigung des Steuerungssystems, da die Umrichter bevorzugt eine Einrichtung umfassen, um bei Ausfall entsprechender Zeittakt-Daten die für sie benötigten Zeitwerte durch Extrapolation zu erhalten.

Schließlich sind in einer Weiterbildung der Erfindung weitere Maßnahmen vorgesehen, die es ermöglichen, daß eine Änderung der Sollgeschwindigkeit durch eine Änderung des Masterclock-Taktes beim Eintreffen dieser entsprechenden Dateninformation beim jeweiligen Umrichter nicht zu einer abrupten Korrektur der Zeittakt-Information führt, sondern daß eine gewisse abgeschwächte Anpassung an die neue Sollwertvorgabe an den Masterclock-Takt erfolgt.

Das Bereitstellen der Information des Phasenprofils zur Erzeugung der Ansteuerungswerte der einzelnen Statorwicklungen in den Zonen des primären Linearmotorantriebes kann unterschiedlich erfolgen. Bevorzugt können die benötigten Daten an die Umrichter nach Art einer Look-up-Tabelle zur Verfügung gestellt werden. Die Daten können in abgestuften Werten vorliegen. Bei Bedarf können Interpolationswerte durch die Umrichter errechnet werden.

Dabei kann das Phasenprofil so übermittelt werden, daß die entsprechenden Werte für den Phasenwinkel und die Stromamplitude für die einzelnen zonenbezogenen Statorwicklungen in Abhängigkeit von vorgegebenen Zeittaktwerten übermittelt werden.

Das Phasenprofil kann aber in einer Abänderung der Erfindung auch in Form eines Startwinkels und einer Tabelle für die Winkelgeschwindigkeit dφ/dz, in Abhängigkeit von der kleinsten auflösbaren Zeiteinheit des umrichterseitigen Zeittaktgebers zur Verfügung gestellt werden.

Schließlich kann in einer weiteren Abwandlung das Phasenprofil auch in einer Form einer Startzeit und einer Tabelle für die Winkelgeschwindigkeit, in Abhängigkeit von der kleinsten auflösbaren Winkeleinheit des umrichterseitigen Zeittaktgebers übermittelt werden.

Da eine Änderung des Geschwindigkeitsprofils jeweils eine Änderung von dem bisherigen Phasenprofil zu einem neuen Phasenprofil für jeden einzelnen Umrichter zur Folge hat, und dies bei laufendem System, sind vorzugsweise weitere diesen Änderungsvorgang unterstützende Maßnahmen vorgesehen. Bei einer Änderung des Geschwindigkeitsprofils wird bevorzugt diese Änderung nicht schlagartig durchgeführt, zumal die durch den in Zonen aufgeteilten Linearmotorantrieb fortbewegten Sekundärteile durch einen Ausgleichsvorgang (Transition) auf das neue Geschwindigkeitsprofil gebracht werden müssen. Während dieses Übergangzeitraumes muß also jedes Sekundärteil, bezogen auf eine betreffende Zone des Primärteils, ein spezielles Phasenprofil durchlaufen, das sich sowohl vom alten Profil (bisheriges Geschwindigkeitsprofil) als auch von dem noch nicht erreichten neuen Profil (entsprechend der neuen Sollvorgabe für das Geschwindigkeitsprofil) unterscheidet.

Um nicht jedem Umrichter alle Phasenprofile der am Übergang beteiligten Sekundärteile vorab übermitteln zu müssen (was zudem wieder eine erhebliche Beanspruchung der Datenbus-Kommunikationsstruktur zur Folge hätte), wird bevorzugt eine Übergangsfunktion von einem Phasenprofil zum nächsten für die einzelnen Zonen definiert, beispielsweise linear über die Zeit. Wird die Übergangsphase vom erwähnten alten auf das neue Profil in allen Umrichtern gleichzeitig gestartet, so genügt das alte Phasenprofil, das neue Phasenprofil und die Übergangzeit bis zum Erreichen des neuen Phasenprofils für die Sekundärteile, um die Synchronität zu wahren. Die Übergangsfunktion anhand der Ausgangsdaten und der zu erreichenden neuen Daten entsprechend dem neuen Profil kann dann in jedem Umrichter oder jedenfalls für Gruppen einzelner Umrichter berechnet werden, um den Datenfluß in der Datenbus-Kommunikationsstruktur zwischen zentraler Steuerungseinheit und Umrichtern zu minimieren.

Die Erfindung eignet sich vor allem für Linearsynchronantriebe. Grundsätzlich läßt sich das Prinzip aber auch für andere Linearantriebe, beispielsweise einen Asynchronantrieb anwenden.

Die Erfindung wird nachfolgend anhand weiterer Einzelheiten Bezug nehmend auf Ausführungsbeispiele näher erläutert. Dabei zeigen im einzelnen:

Figur 1 :    ein schematisches auszugsweises Blockdiagramm zur Verdeutlichung der Steuerungsvorrichtung für ein Linearsynchronmotor-System; und

Figur 2 :    ein Diagramm zur Verdeutlichung der Zeittakt-Anpassung in den einzelnen Umrichtern bei einer Änderung der Soll-Geschwindigkeit in der zentralen Steuerungsvorrichtung, d.h. in dem Masterclock-Generator.

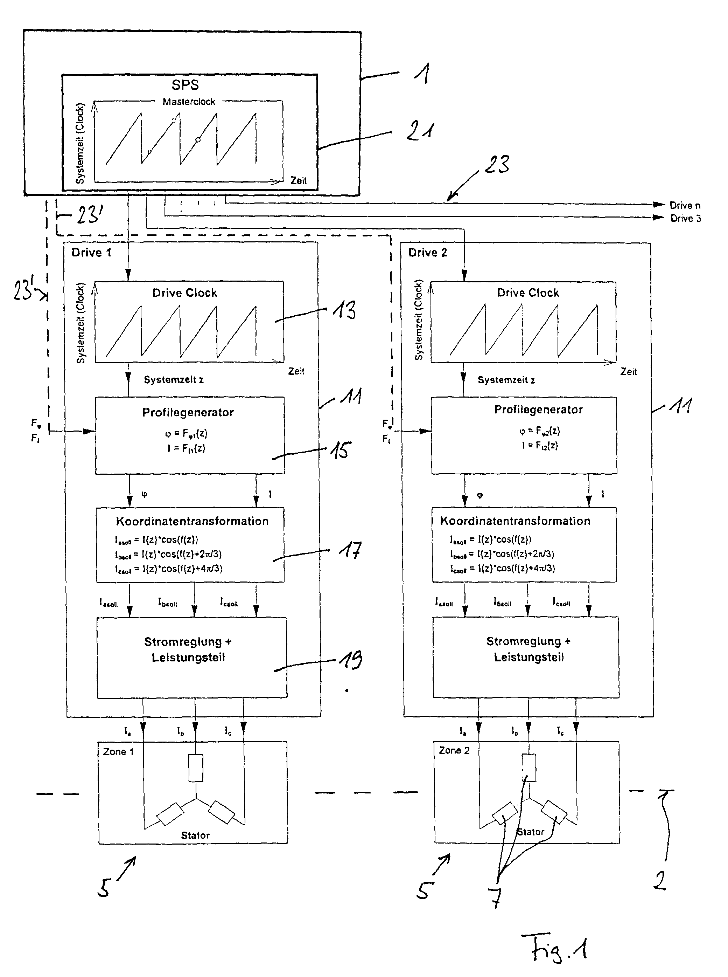

In dem Blockschaltbild gemäß Figur 1 ist eine zentrale Steuerungseinrichtung 1 gezeigt, die in der Regel aus einem zentralen Rechner besteht.

Das Linearsynchronmotor-System umfaßt auf einer Linearmotorstrecke ein sogenanntes Primärteil 2, welches in eine Vielzahl hintereinander geschalteter (verketteter) Zonen 5 gegliedert ist. Diese Zonen 5 umfassen in an sich bekannter Weise Statorwicklungen 7 zur Erzeugung eines Wander-Magnetfeldes zum Antrieb sogenannter Sekundärteile, d.h. beispielsweise im Falle einer Kunststoffolienreckanlage zum Antrieb von längs der Linearmotorstrecke 2 zu verfahrenden Kluppen, die in der Regel mit einem entsprechenden Permanentmagneten versehen sind.

Zur Ansteuerung der einzelnen in Zonen gegliederten Linearsynchronmotor-Wegabschnitten sind den einzelnen Zonen 5 jeweils sogenannte Umrichter 11 zugeordnet, die nachfolgend auch als Frequenzumrichter bezeichnet werden.

Jeder der einer Zone 5 zugeordneten Umrichter 11 umfaßt dabei einen Zeittaktgeber 13, d.h. einen sogenannten Clock-Generator 13, der nachfolgend teilweise auch als Slave-Clock-Generator bezeichnet wird.

Ferner weist jeder Umrichter 11 einen Profilgenerator 15 auf, der in Abhängigkeit des im Zeittaktgeber 13 erzeugten Zeitwert anhand vorgegebener Daten für den Phasenwinkel und die Stromamplitude jeweils zeitabhängig den Phasenwinkel φ und die Stromamplitude I nach den Formeln

$$\varphi = F_{\varphi 1}\{z\}$$

bzw. den Strom nach der folgenden Formel

$$I = F_{I1}\{z\}$$

berechnen kann.

Anhand des zeittaktabhängigen Phasenwinkels und der zeitabhängigen Stromamplitude können dann über diesen Profilgenerator 15 in einer nachgeschalteten Transformationsstufe 17 die Strom-Sollamplituden für die im gezeigten Ausführungsbeispiel benötigten drei Stromwerte $I_a$, $I_b$ und $I_c$ für die drei Statorwicklungen 7 berechnet und erzeugt werden, die dann einer Stromregelungs- und Leistungsstufe 19, einer sogenannten Treiberstufe zugeführt werden, an deren Ausgängen die Statorwicklung 7 zur entsprechenden Stromversorgung mit den errechneten Stromwerten $I_a$ bis $I_c$ pro Zone angeschlossen sind.

Schließlich ist in dem Blockbilddiagramm gemäß Figur 1 ebenfalls eingezeichnet, daß die zentrale Steuerungseinrichtung 1 einen zentralen Zeittaktgeber 21 umfaßt, der auch als Masterclock-Generator bezeichnet wird.

Im Blockschaltbild gemäß Figur 1 sind lediglich zwei Umrichter 11 gezeigt, die die Statorwicklungen beispielsweise in zwei aufeinander folgenden Zonen 5 des Linearsynchronmotor-Systems ansteuern. Über eine schematisch gezeigte Daten- und/oder Kommunikationsbusstruktur 23 erfolgt von der zentralen Steuerungseinrichtung 1 eine nachfolgend beschriebene Ansteuerung aller weiteren, in Figur 1 nicht näher gezeigten aber ansonst gleich aufgebauten Umrichterstufen 11.

Da bei dem vorgegebenen Geschwindigkeits- und/oder Beschleunigungsprofil längs des Primärteils des Linearsynchronmotor-Systems das Geschwindigkeitsprofil für alle Sekundärteile über eine betreffende Zone 5 und damit für die der jeweiligen Zone 5 zugeordneten Umrichter 11 konstant ist, treten also die betreffenden Sekundärteile mit einem konstanten Zeitabstand T in die jeweilige Zone 5 ein. Von daher wiederholen sich die Anforderungen für jeden Umrichter 11 mit der Taktzeit T.

Von daher ist es zur Ansteuerung lediglich erforderlich, daß den einzelnen Umrichtern 5, in dem gezeigten Ausführungsbeispiel den einzelnen Profilgeneratoren 15 die jeweiligen Daten zur Erzeugung eines spezifischen, zonenabhängigen Phasenprofils vorgegeben werden. Über diesen Profilgenerator 15 können dann die entsprechenden Phasen- und Stromamplituden-Werte zur Ansteuerung der zugeordneten Statorwicklungen 7 berechnet und erzeugt werden. Ansonsten ist es nur erforderlich, daß von der zentralen Steuerungseinrichtung 1, d.h. im besonderen vom zentralen Zeittaktgeber (Masterclock) 21, lediglich über die Datenbusstruktur 23 ein Masterclock-Takt den einzelnen Umrichtern 11 zugeführt werden muß, um den Masterclock mit den einzelnen Drive- oder Slave-Clocks zu synchronisieren. Durch den Takt des Masterclock-Generators wird die Ablaufgeschwindigkeit des Gesamtsystems, d.h. die Geschwindigkeit der Sekundärteile, bestimmt und festgelegt.

Die entsprechenden Datenvorgaben für das Phasenprofil können bei Bedarf über die gleiche Daten- und/oder Kommunikationsbusstruktur 23 (über die auch die Taktsynchronisation zwischen dem Masterclock- und den nachgeordneten Umrichtern-, Drive-, Clock-Gebern synchronisiert wird) übertragen werden. Abweichend davon können diese Daten zur Erzeugung eines entsprechenden Phasenprofils auch über eine separate Daten- und/oder Kommuniktationsbusstruktur 23' zwischen der zentralen Steuerungseinrichtung 1 und den einzelnen Umrichtern weitergegeben werden.

Da die Daten für das Phasenprofil nur einmal übertragen werden müssen und ansonsten nur die Synchronität zwischen den Masterclocks und den Slave-Clocks aufrecht erhalten werden muß, müssen vergleichsweise nur wenig Daten ständig übertragen werden. Dies trägt auch zu einer Erhöhung der Robustheit des gesamten Systems bei, da auch bei Auftreten von Übertragungsfehlern oder Ausfällen beim Übertragen der Daten des Phasenprofils die Datenübertragung gestoppt und erneut gestartet werden kann, ohne daß dies zu einer grundsätzlichen Beeinträchtigung des Steuerungssystems führt.

Bevorzugt pro Takt T, mit der die Sekundärteile in die jeweilige Zone 5 einlaufen, zumindest einmal wird ein entsprechender Absolutwert für die Zeittaktsteuerung vom Masterclock an die Slaveclocks 5 übertragen. Die Übertragungsdichte kann beliebig erhöht werden. Sollte jedoch eine Störung auftreten und innerhalb eines Zeittaktes T eine Taktgeber-Synchronisation nicht stattfinden können, so ist hilfsweise in den Umrichtern 11 vorgesehen, daß eine Extrapolation der Zeittakt-Synchronisationswerte intern erzeugt wird, bis wieder ein nächstes Zeittakt-Telegramm vom Masterclock-Generator 21 empfangen wird.

Das benötigte Phasen- und damit das Geschwindigkeitsprofil zur Ansteuerung der Statorwicklung 7 kann in den einzelnen Umrichtern unterschiedlich berechnet werden.

Möglich ist, daß das Phasenprofil, d.h. die Daten für das Phasenprofil, für jeden Umrichter 11 nach Art einer Tabelle, beispielsweise einer sogenannten Look-up-Tabelle, zur Verfügung gestellt wird, die nachfolgend wiedergegeben ist:

| clock z | Phasenwinkel φ | Stromamplitude I |
|---------|----------------|------------------|
| z1 | φ1 | I1 |

(fortgesetzt)

| clock z | Phasenwinkel $\varphi$ | Stromamplitude I |
|---------|------------------------|------------------|
| z2 | $\varphi$2 | I2 |
| z3 | $\varphi$3 | I3 |
| z4 | $\varphi$4 | I4 |
| ... | ... | ... |

Mit anderen Worten wird das Geschwindigkeitsprofil für eine Zone und damit für die einzelnen Umformer 11 durch die Werte und Daten für den Phasenwinkel $\varphi$ (z) und die Stromamplitude I(z) bezogen auf eine Taktgeber-Zeit z vorgegeben, wobei die einzelnen Umrichter 11 - falls dies erforderlich sein sollte - zwischen den so vorgegebenen Stufenwerten noch Zwischenwerte rechnerisch interpolieren können.

Abweichend davon können die Daten für ein entsprechendes Phasenprofil auch entsprechend der nachfolgenden Tabelle den Profilgeneratoren 15 zur Verfügung gestellt werden:

| clock z | Winkelgeschwindigkeit $\omega$ | Stromamplitude I |
|---------|-------------------------------|------------------|
| z1 | $\omega$1 | I1 |
| z2 | $\omega$2 | I2 |
| z3 | $\omega$3 | I3 |
| z4 | $\omega$4 | I4 |
| ... | ... | ... |

Bei dieser Variante wird das Phasenprofil im jeweiligen Umrichter 11, ausgehend von einem Startwinkel $\varphi$1 und aus den tabellarisch zur Verfügung gestellten Winkelgeschwindigkeiten bezogen auf eine Zeittaktänderung $\omega$(z) = $d\varphi/dz$ (= Drehgeschwindigkeit des Stromvektors), also als Gradient bezogen auf die kleinste auflösbare und nachfolgend als "tick" bezeichnete Zeiteinheit "tick" berechnet. In diesem Fall wird dem Umrichter also nicht der Phasenwinkel für einen bestimmten Zeitpunkt vorgegeben, sondern die erforderliche Änderung dieses Winkels für einen bestimmten Zeitpunkt, also die Drehgeschwindigkeit des Stromvektors. Die Stromamplitude wird, wie im erstgenannten Fall, in Form der Beziehung I(z) ermittelt.

Dabei wird im Umrichter 11, d.h. im Profilgenerator 15, aus der aktuellen Clock-Zeit die Winkelgeschwindigkeit in Grad/tick und aus der zeitlichen Änderung die Clock-Zeit und aus der Änderung der Winkelgeschwindigkeit in Grad/tick die aktuelle Winkeländerung in Grad berechnet. Die Kummulierung aller Winkeländerungen ergibt den aktuellen Sollwinkel $\varphi$.

In einer dritten Abwandlung kann das Phasenprofil in Form der Startzeit z1 und in Form von in tabellarisch zur Verfügung gestellten Werten für die Winkelgeschwindigkeit bezogen auf die Clock-Zeit $\omega$ = $d\varphi/dz$ über den Winkel $\varphi$ berechnet werden,

| Phasenwinkel $\varphi$ | Winkelgeschwindigkeit $\omega$ | Stromamplitude I |
|------------------------|-------------------------------|------------------|
| $\varphi$1 | $\omega$1 | I1 |
| $\varphi$2 | $\omega$2 | I2 |
| $\varphi$3 | $\omega$3 | I3 |
| $\varphi$4 | $\omega$4 | I4 |
| ... | ... | ... |

Der Umrichter 11 berechnet hier aus dem aktuellen Winkel $\varphi$ die Winkelgeschwindigkeit in Grad/tick und aus der zeitlichen Änderung die Clock-Zeit und aus der Winkelgeschwindigkeit in Grad/tick die aktuelle Winkeländerung in Grad. Die Kummulierung all dieser Winkeländerung ergibt den aktuellen Sollwinkel $\varphi$.

Bei dieser dritten Methode wird also die Drehgeschwindigkeit des Phasenwinkels in Abhängigkeit vom Ort $\omega$ ($\varphi$) dargestellt. Durch die Verwendung von synchronen Linearantrieben kann dabei die Lage des längs des Sekundärteils fortbewegten Primärteils (im Falle einer Folienreckanlage in Form von Kluppenwagen) mit ausreichender Genauigkeit mit der Position der Magnetwelle gleichgesetzt werden, da die Pole der Permanentmagneten des Sekundärteils (Kluppe) mit der elektromagnetischen Welle des Primärteils konform gehen. Aus theoretischer Sicht erscheint die Vewendung von $\omega$ ($\varphi$) gegenüber den beiden vorstehend genannten Varianten weniger vorteilhaft, da $\varphi$ selbst wieder eine Funktion der Zeit z ist. In der Praxis ist diese ortsabhängige Betrachtung jedoch sinnvoll, da bei der Bedienung der Anlage für einen bestimmten Ort oder für einen bestimmten Bereich (und nicht für einen Zeitabschnitt) ein bestimmtes Geschwindigkeitsprofil vorgegeben wird, vorzugsweise in der Form, daß die Geschwindigkeiten relativ zu einer minimalen Geschwindigkeit beispielsweise in Form einer Ausgangs- oder einer Einlaufgeschwindigkeit auf 1 normiert ist.

Auch die Stromstärke wird in dieser dritten Variante in Abhängigkeit von $\varphi$ dargestellt.

Nachfolgend soll auf die Änderung des Takts des Masterclock-Generators 21 eingegangen werden, die dann durchgeführt wird, wenn eine Änderung der Antriebsgeschwindigkeit längs des Linearsynchronmotor-Systems bewirkt werden soll.

Im Fall einer Änderung des Masterclock-Taktes wird diese über die Datenbusstruktur 23 den einzelnen Umrichtern 11 und dabei wiederum den einzelnen umrichterseitigen Zeittaktgebern 13 übermittelt. Beim Eintreffen eines entsprechenden Masterclock-Takt-Telegrammes bei den umrichterseitigen Zeittaktgebern 13 würde dann eine Differenz zwischen den umrichterseitigen Clock-Takt und dem Masterclock festgestellt werden, was an sich eine abrupte Korrektur im umrichterseitigen Zeittakt 13 zur Folge hätte.

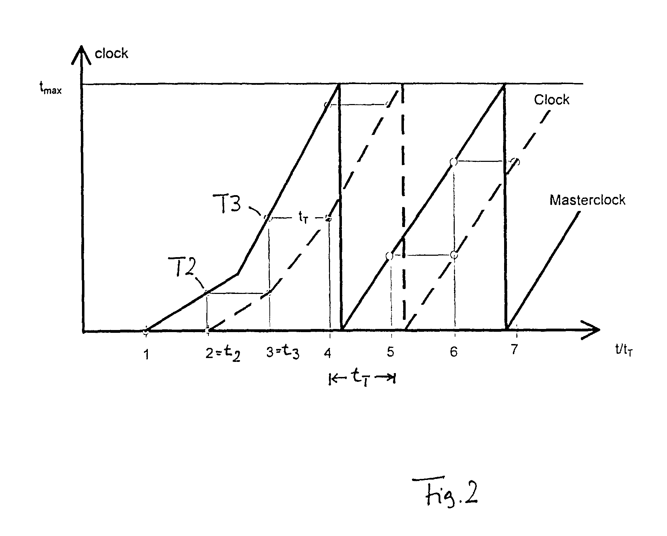

Anhand von Figur 2 wird erläutert, wie eine weniger abrupte Korrektur umrichterseitig vorgenommen werden kann.

Dabei ist in Figur 2 ein Diagramm dargestellt, auf dessen X-Achse die Zeitachsenperiode $t/t_T$ und auf dessen Y-Achse die maximale Taktzeit $t_{max}$ eines Clock-Generators 13 wiedergegeben ist.

Darin ist eine sägezahnförmige Zeittaktkurve für den Masterclock-Generator eingezeichnet, der in diesem Ausführungsbeispiel von einer zunächst eingestellten größeren Taktzeit T auf eine steiler ansteigende kürzere Taktzeit T umgestellt wird.

Eine Anpassung erfolgt nunmehr in den Umrichtern 11 in Abhängigkeit eines Intervalls $t_T$ derart, daß der Masterclock-Zeittakt zeitlich äquidistant in dem umrichterseitigen Zeittaktgeber 13 angepaßt wird. Während also zum Zeitpunkt 1 bereits der Masterclock-Zeittakt ansteigt, startet der umrichterseitige Zeittakt erst zur Intervallphase 2. Die Änderung des Masterclock-Zeittaktes erfolgt im Ausführungsbeispiel in der zweiten Zeittaktphase, also zwischen $t_2$ und $t_3$. Die entsprechenden Zeitwerte T2 und T3 des Masterclock-Zeittaktes werden im Umrichter 11 um die erwähnte Intervallzeit $t_T$ versetztliegend erreicht, wobei die Zeittaktstrecke zwischen den Werten T2 und T3 bezogen auf den Slave-Clock-Takt linear interpoliert wird. D.h. die abrupte Änderung in der Zeittaktkurve zwischen den Werten T2 und T3 bei dem Masterclock-Takt wird "gemildert". Mit anderen Worten werden die Zeittakte in den umrichterseitigen Zeittaktgebern 13 um die Intervallzeit $t_T$ später abgearbeitet, als die entsprechenden Zeittaktwerte des Masterclocks. Die im n-ten Datentelegramm vom Masterclock-Generator empfangenen Werte werden erst beim Eintreffen des (n+1)-ten empfangenen Daten-Telegramms erreicht.

Nachfolgend wird noch auf eine Änderung des Phasenprofils im Umrichter eingegangen.

Eine Änderung des Geschwindigkeitsprofils von einem sogenannten "alten Profil" auf ein "neues Profil" bei laufendem System bedingt eine Änderung der Phasenprofile aller Umrichter 11. Dieser Übergang soll aber nicht schlagartig erfolgen, da die betreffenden Sekundärteile durch einen Ausgleichsvorgang (Transition) auf ihre neue Position gebracht werden. Während dieses Übergangszeitraumes muß von daher ein betreffendes sich in einer betreffenden Zone befindliches Sekundärteil ein spezielles Phasenprofil durchlaufen, daß sich sowohl von dem sogenannten "alten Profil" als auch von dem "neuen Profil" unterscheidet.

Um nicht jedem Umrichter 11 alle Phasenprofile der am Übergang beteiligten Primärteile vorab übermitteln zu müssen (was eine beachtliche Dateninformationsdichte zwischen zentraler Steuerungseinheit 1 und den zugeordneten Umrichtern 11 zur Folge hätte), ist vorgesehen, daß in den einzelnen Umrichtern eine Übergangsfunktion abgespeichert oder entsprechende Daten, beispielsweise von der zentralen Steuerungseinrichtung 1, zuführbar sind, die beispielsweise eine lineare Anpassung zwischen beiden Profilen über die Zeit ermöglicht. Aber auch nichtlineare Übergangsfunktionen sind möglich. Wird die Übergangsfunktion bei allen Umrichtern 11 gleichzeitig gestartet, so genügen die Daten bezüglich des alten Phasenprofils, die Daten bezüglich des neuen Phasenprofils und die Übergangszeit, um die Synchronität zu bewahren. Anhand dieser Daten kann jeder Umrichter 11 die definierte ihm zugeordnete Übergangsfunktion für die Phasenprofile während der Transition berechnen.

Das Ausführungsbeispiel ist für die Fälle erläutert worden, daß für jede Zone ein eigener Umrichter 11 mit den angegebenen Komponenten vorgesehen ist. Es ist aber durchaus möglich, daß zumindest zwei Zonen oder mehrere als Gruppen zusammengefaßt sind, die von einem Umrichter angesteuert werden, oder dem zumindest gemeinsame Komponenten zugeordnet sind, beispielsweise ein gemeinsamer Slave-Clock-Generator, ein gemeinsamer Profilgenerator, eine gemeinsame Koordinations-Transformationsstufe und/oder eine gemeinsame Stromregelungs-Leistungsstufe.

**Patentansprüche**

1. Steuerungsvorrichtung für linearmotor-getriebene Einrichtungen, insbesondere zum Antrieb von Kluppen einer Folienreckanlage, mit den folgenden Merkmalen,

- mit einer zentralen Steuerungseinrichtung (1) und einer Vielzahl von darüber zumindest mittelbar angesteuerten Umrichtern (11),
- den Umrichtern (11) ist jeweils zumindest eine Zone (5) eines Primärteils einer Linearmotorstrecke (2) zugeordnet, in welcher die in der betreffenden Zone (5) vorgesehenen Statorwicklungen (7) des Linearmotorantriebes zum Antrieb zumindest eines längs des Primärteiles verfahrbaren Sekundärteiles ansteuerbar sind,
- über die Umrichter (11) sind die Statorwicklungen (7) in den einzelnen Zonen (5) derart ansteuerbar, daß periodisch durchfahrene Phasenprofile bzw. Geschwindigkeitsprofile jeweils am Ende einer Zone (5) und am Beginn einer nachfolgenden Zone (5) aufeinander abgestimmt sind,
- jedem Umrichter (11) ist oder Gruppen von mehreren Umrichtern (11) sind eine separate Rechnereinheit (17, 19) zugeordnet,
- die Phasenprofile bzw. Geschwindigkeitsprofile sind in Abhängigkeit von Zeittaktsignalen in der jeweiligen Rechnereinheit abgespeichert,
- in den betreffenden Rechnereinheiten (17, 19) sind aus den Phasenprofil-Daten die entsprechenden Daten zur Ansteuerung der Statorwicklungen (7) in den betreffenden Zonen (5) berechen- und/oder erzeugbar,
- eine Synchronisationseinrichtung ist vorgesehen, worüber während des Betriebs die Zeittaktsignale in den Umrichtern (11) miteinander synchronisierbar sind,

**dadurch gekennzeichnet,** daß

- in den Rechnereinheiten der Umrichter (11) ein einen Zusammenhang zwischen dem Phasenwinkel, der Stromamplitude und den Zeittaktsignalen beschreibendes Phasenprofil zur Ansteuerung der Statorwicklungen (7) in einer zugehörigen Zone (5) abgespeichert ist.

2. Steuerungsvorrichtung nach Anspruch 1, **dadurch gekennzeichnet,** daß die Synchronisationseinrichtung einen zentralen Clock-Generator (21) in der zentralen Steuerungseinrichtung (1) umfaßt.

3. Steuerungsvorrichtung nach Anspruch 2, **dadurch gekennzeichnet,** daß eine Änderung der Anlagengeschwindigkeit durch Änderung des in dem zentralen Clock-Generator (21) erzeugten Zeittaktes durchführbar ist.

4. Steuerungsvorrichtung nach Anspruch 2 oder 3, **dadurch gekennzeichnet,** daß durch Änderung des Zeittaktes in dem zentralen Clock-Generator (21) und durch die darüber veränderte Zeittakt-Steuerung in den Umrichtern (11) die Anlagengeschwindigkeit so veränderbar ist, daß das Geschwindigkeitsprofil, mit welchem ein Sekundärteil längs des Primärteiles verfahrbar ist, bezogen auf eine Ausgangs- oder Einlaufgeschwindigkeit ($v_0$) unabhängig vom Absolutwert der Anlagengeschwindigkeit unverändert bleibt.

5. Steuerungsvorrichtung nach einem der Ansprüche 1 bis 4, **dadurch gekennzeichnet,** daß die Umrichter (11) Stromregler aufweisen.

6. Steuerungsvorrichtung nach einem der Ansprüche 1 bis 5, **dadurch gekennzeichnet,** daß ein zeitlicher Abgleich der Zeittakt-Synchronisation zwischen dem zentralen Clock-Generator (21) in der zentralen Steuerungseinrichtung (1) und den Zeittaktgebern (13) in den Umrichtern (11) zumindest einmal pro Zeitintervall T erfolgt, wobei das Zeitintervall T der minimalen Taktzeit entspricht, mit der zwei aufeinanderfolgende Sekundärteile in eine Zone (5) eintreten.

7. Steuerungsvorrichtung nach einem der Ansprüche 1 bis 6, **dadurch gekennzeichnet,** daß bei Ausfall eines von der zentralen Steuerungseinrichtung (1) kommenden Zeittakt-Synchronssignals in den Umrichtern (11) Zeittaktsignale durch Extrapolation erzeugbar sind.

8. Steuervorrichtung nach einem der Ansprüche 1 bis 7, **dadurch gekennzeichnet,** daß den Umrichtern (11) spätestens bei Änderung der Antriebsgeschwindigkeit in den Linearsynchronmotor-System neue Phasenprofil-Daten zuführbar sind, vorzugsweise von der zentralen Steuerungseinrichtung (1).

9. Steuerungsvorrichtung nach einem der Ansprüche 1 bis 8, **dadurch gekennzeichnet,** daß die Phasenprofil-Daten zur Erzeugung entsprechender Phasenwinkel- und Stromamplituden-Werte bezogen auf ein Zeittaktsignal zur Ansteuerung der Statorwicklungen (3) in den betreffenden Zonen (5) tabellarisch, vorzugsweise in Form einer Look-up-Tabelle von der zentralen Steuerungseinrichtung (1) zuführbar sind.

10. Elektronische Steuerungsvorrichtung nach Anspruch 9, **dadurch gekennzeichnet,** daß die Phasenprofil-Daten zeittaktabhängig die Daten (z) für die Phasenwinkel φ und die Stromamplitude (I) umfassen.

11. Steuerungsvorrichtung nach Anspruch 10, **dadurch gekennzeichnet,** daß die Phasenprofil-Daten zeittaktabhängige Daten in Form der Winkelgeschwindigkeit (ω) und Daten für die Stromamplitude (I) umfassen.

12. Steuerungsvorrichtung nach Anspruch 9, **dadurch gekennzeichnet,** daß die Phasenprofil-Daten phasenwinkelabhängige Daten (φ) für die Winkelgeschwindigkeit (ω) und die Stromamplitude (I) umfassen.

13. Steuerungsvorrichtung nach einem der Ansprüche 1 bis 12, **dadurch gekennzeichnet,** daß in den Umrichtern (11), vorzugsweise der in den Umrichtern (11) zugeordneten separaten Rechnereinheit Übergangsdaten abspeicher- oder vorzugsweise über die zentrale Steuerungseinrichtung (1) zuführbar sind, worüber entsprechende Phasenwinkel- und Stromamplituden-Wert bei einer Änderung des Geschwindigkeitsprofils berechenbar sind.

14. Steuerungsvorrichtung nach Anspruch 13, **dadurch gekennzeichnet,** daß die Berechnung und/oder Änderung des Geschwindigkeitsprofils in der Übergangsfunktion vom bisherigen zu einem neuen Geschwindigkeitsprofil vorzugsweise linear in Abhängigkeit der Zeit erfolgt.

15. Steuerungsvorrichtung nach Anspruch 13 oder 14, **dadurch gekennzeichnet,** daß bei einer Änderung des Geschwindigkeitsprofils alle Umrichter (11) von der zentralen Steuerungseinheit (1) so ansteuerbar sind, daß in den Umrichtern (11) die entsprechenden Werte für die Stromamplituden und Phasenwinkel für die Stromversorgung der Statorwicklungen (7) gleichzeitig gestartet werden.

16. Steuerungsvorrichtung nach einem der Ansprüche 1 bis 15, **dadurch gekennzeichnet,** daß die in den Umrichtern (11), insbesondere in den umrichterseitigen Zeittaktgebern (13) berechneten Zeittakte um eine Zeittaktphase ($t_T$) gegenüber einem vorgegebenen Masterclock-Zeittakt verzögert umgesetzt werden.


**Claims**

1. A control device for linear motor driven means, more particularly for driving tenters of a foil stretching arrangement having the following features:

   - a central control means (1) and a plurality of inverters (11) at least indirectly controlled thereby,
   - at least one zone (5) of a primary part of a linear motor path (2) is associated with the inverters (1), in which the stator windings (7), provided in the respective zone (5) of the linear motor drive are able to be operated for driving at least one secondary part adapted to move along the primary part,
   - by way of the inverters (11) the stator windings (7) in the individual zones (5) are able to be so operated that phase profiles or, respectively, speed profiles, periodically moved through, respectively at the end of a zone (5) and at the commencement of a following zone (5) are matched to suit each other,
   - each inverter (11) or group of a plurality of inverters (11) has a separate computing unit (17 and 19) associated with it,
   - the phase profiles or, respectively, speed profiles are stored in a manner dependent on clock signals in the respective computing unit and
   - in the respective computing units (17 and 19) the respective data for operation of the stator windings (7) in the respective zones (5) can be computed and/or generated and
   - a synchronizing means is provided by way of which during operation the clock signals are able to be synchronized with one another in the inverters (11),

   characterized in that

   - in the computing units of the inverters (11) a phase profile describing the connection, serving for operation of the stator windings (7) in a corresponding zone (5), between the phase angle, the current amplitude and the clock signals is stored.

2. The control device as claimed in claim 1, characterized in that the synchronizing means comprises a central clock generator (21) in the central control means (1).

3. The control device as claimed in claim 2, characterized in that a change in the speed of the arrangement may be implemented by changing the clock signal generated in the central clock generator (21).

4. The control device as claimed in claim 2 or in claim 3, characterized in that by changing the clock signal in the central clock generator (21) and by the clock control changed thereby in the inverter (11) the speed of the arrangement may be so changed that the speed profile, with which a secondary part is able to be moved along the primary part, as related to an exit or entry speed ($v_0$), and independently of the absolute value of the speed of the arrangement, remains unchanged.

5. The control device as claimed in any one of the claims 1 through 4, characterized in that the inverters (11) possess current regulators.

6. The control device as claimed in any one of the claims 1 through 5, characterized in that matching in time of the clock signal synchronization between the central clock generator (21) takes place in the central control means (1) and the clock signal producing means (13) in the inverters (11) at least once per time interval T, with which two sequentially occurring secondary parts enter a zone (5).

7. The control device as claimed in any one of the claims 1 through 6, characterized in that on failure of a clock synchronizing signal coming from the central control means (1), clock signals may be generated in the inverters (11) by extrapolation.

8. The control device as claimed in any one of the claims 1 through 7, characterized in that at the latest on modification of the drive speed in the linear synchronous motor system new phase profile data may be supplied to the inverters (11), preferably from the central control means (1).

9. The control device as claimed in any one of the claims 1 through 8, characterized in that the phase profile data for producing corresponding phase angle and current amplitude values as related to a clock signal for operation of the stator windings (3), the phase profile data may be supplied in the respective zones (5) in a table form and preferably in the form of a look-up table from the central control means (1).

10. The control device as claimed in claim 9, characterized in that the phase profile data in a time related manner comprise the data (z) for the phase angle ($\phi$) and the current amplitude (I).

11. The control device as claimed in claim 10, characterized in that the phase profile data comprise clock signal dependent data in the form of the angular velocity ($\omega$) and the data for the current amplitude (I).

12. The control device as claimed in claim 9, characterized in that the phase profile data include phase angle dependent data ($\phi$) for the angular velocity ($\omega$) and the current amplitude (I).

13. The control device as claimed in any one of the claims 1 through 12, characterized in that in the inverters (11) preferably of the separate computing unit associated in the inverters (11), transitional data can be stored or preferably supplied by way of the central control means (1), by way of which corresponding phase angle and current amplitude values can be calculated on a change in the speed profile.

14. The control device as claimed in claim 13, characterized in that the calculation and/or modification of the speed profile takes place in the transitional function from the previous to a new speed profile, preferably linearly, in a time dependent manner.

15. The control device as claimed in claim 13 or claim 14, characterized in that on a change in the speed profile all inverters (11) are able to be so operated by the central control unit (1) that in the inverters (11) the corresponding values for the current amplitudes and the phase angles for the power supply to the stator windings (7) are simultaneously started.

16. The control device as claimed in any one of the claims 1 through 15, characterized in that the clock signals calculated in the inverters (11) and more especially in the clock signal generators (13) on the inverter side, are converted with a delay of one clock phase ($t_T$) in relation to a predetermined master clock signal.

**Revendications**

1. Système de commande pour dispositifs entraînés par moteur linéaire, en particulier pour l'entraînement des pinces d'une installation d'étirage de feuilles, présentant les caractéristiques suivantes :

   - un dispositif de commande centralisée (1) et une pluralité de convertisseurs de fréquence (11) qui sont au moins indirectement commandés par lui,
   - au moins une zone (5) d'un primaire d'une section (2) à moteur linéaire est subordonnée aux convertisseurs (11) ; dans cette section, les enroulements de stator (7) de l'entraînement à moteur linéaire prévus dans la zone (5) concernée peuvent être commandés en vue de l'entraînement d'au moins un secondaire pouvant être déplacé le long du primaire,
   - les enroulements de stator (7) peuvent être commandés dans les zones individuelles (5) par les convertisseurs de fréquence (11), de sorte que les profils de phase et les profils de vitesse respectifs balayés périodiquement soient accordés les uns aux autres à l'extrémité d'une zone (5) et au début de la zone (5) suivante,
   - une unité de calcul séparée (17, 19) est subordonnée à chaque convertisseur (11) ou à des groupes de plusieurs convertisseurs (11),
   - les profils de phase et les profils de vitesse respectifs sont mémorisés dans l'unité de calcul correspondante, en fonction des signaux de synchronisation,
   - dans les unités de calcul (17, 19) concernées, les données correspondantes pour la commande des enroulements de stator (7) dans les zones (5) concernées peuvent être calculées ou générées à partir des données de profil de phase,
   - un dispositif de synchronisation est prévu, par lequel, pendant le fonctionnement, les signaux de synchronisation dans les convertisseurs (11) peuvent être synchronisés les uns avec les autres,

   caractérisé en ce que, dans les unités de calcul des convertisseurs (11), un profil de phase destiné à la commande des enroulements de stator (7) et décrivant une relation entre l'angle de phase, l'amplitude du courant et les signaux de synchronisation est mémorisé dans une zone associée (5).

2. Système de commande selon la revendication 1, caractérisé en ce que le dispositif de synchronisation comporte une horloge centrale génératrice de cadence (21) dans le dispositif de commande centralisée (1).

3. Système de commande selon la revendication 2, caractérisé en ce qu'un changement de la vitesse de l'installation peut être effectué par un changement de la cadence produite dans l'horloge centrale génératrice de cadence (21).

4. Système de commande selon la revendication 2 ou la revendication 3, caractérisé en ce que, par changement de la cadence dans l'horloge centrale génératrice de cadence (21) et par la commande, en conséquence modifiée, de la cadence dans les convertisseurs (11), la vitesse de l'installation peut être modifiée, de sorte que le profil de vitesse avec lequel un secondaire peut être déplacé le long du primaire, rapporté à une vitesse d'entrée ou de sortie ($v_0$), reste inchangé, indépendamment de la valeur absolue de la vitesse de l'installation.

5. Système de commande selon l'une quelconque des revendications 1 à 4, caractérisé en ce que les convertisseurs (11) présentent des régulateurs de courant.

6. Système de commande selon l'une quelconque des revendications 1 à 5, caractérisé en ce qu'une égalisation temporelle de la synchronisation de cadence entre l'horloge centrale génératrice de cadence (21) dans le système de commande centralisée (1) et les rythmeurs de temps (13) dans les convertisseurs (11) a lieu au moins une fois par intervalle de temps T, l'intervalle de temps T correspondant à la durée minimale de cycle avec laquelle deux secondaires consécutifs pénètrent dans une zone (5).

7. Système de commande selon l'une quelconque des revendications 1 à 6, caractérisé en ce que, en cas de panne d'un signal de synchronisation de cadence venant du système de commande centralisée (1), des signaux de cadence dans les convertisseurs (11) peuvent être produits par extrapolation.

8. Système de commande selon l'une quelconque des revendications 1 à 7, caractérisé en ce que, au plus tard lors d'un changement de la vitesse d'entraînement dans le système à moteur synchrone linéaire, de nouvelles données de profil de phase peuvent être amenées aux convertisseurs (11), de préférence depuis le dispositif de commande centralisée (1).

9. Système de commande selon l'une quelconque des revendications 1 à 8, caractérisé en ce que les données de profil de phase pour la production des valeurs correspondantes d'angle de phase et d'amplitude de courant rapportées à un signal de cadence pour la commande des enroulements de stator (3) dans les zones concernées (5) peuvent être introduites depuis le dispositif de commande centralisée (1), sous forme de table, de préférence sous la forme d'une table à consulter.

10. Système de commande électronique selon la revendication 9, caractérisé en ce que les données de profil de phase comprennent les données (z), dépendantes de la cadence, pour l'angle de phase φ et pour l'amplitude de courant I.

11. Système de commande selon la revendication 10, caractérisé en ce que les données de profil de phase comprennent des données, dépendantes de la cadence, sous forme de la vitesse angulaire (ω) et des données pour l'amplitude du courant (I).

12. Système de commande selon la revendication 9, caractérisé en ce que les données de profil de phase comprennent des données (φ), dépendantes de l'angle de phase, pour la vitesse angulaire (ω) et pour l'amplitude du courant (I).

13. Système de commande selon l'une quelconque des revendications 1 à 12, caractérisé en ce que, dans les convertisseurs (11), de préférence dans l'unité de calcul séparée associée aux convertisseurs (11), des données de transition peuvent être stockées ou, de préférence, alimentées par le dispositif de commande centralisée (1), de sorte que des valeurs correspondantes d'angle de phase et d'amplitude de courant peuvent être calculées lors d'un changement du profil de vitesse.

14. Système de commande selon la revendication 13, caractérisé en ce que le calcul et/ou le changement du profil de vitesse, dans la fonction de transition du profil de vitesse préexistant vers un nouveau profil, se produit de préférence de manière linéaire en fonction du temps.

15. Système de commande selon la revendication 13 ou la revendication 14, caractérisé en ce que, lors d'un changement du profil de vitesse, tous les convertisseurs (11) peuvent être commandés par l'unité de commande centralisée (1), de sorte que les valeurs correspondantes pour les amplitudes de courant et les angles de phase pour l'alimentation en courant des enroulements de stator (7) soient démarrées simultanément dans les convertisseurs (11).

16. Système de commande selon l'une quelconque des revendications 1 à 15, caractérisé en ce que les cadences calculées dans les convertisseurs (11), en particulier dans les rythmeurs de temps (13) situés côté convertisseurs, sont retardées d'une phase de cadence ($t_T$) par rapport à une cadence prédéfinie de l'horloge mère.

Fig.1

Fig.2